# EUROPÄISCHE PATENTSCHRIFT

(11) **EP 1 088 961 B1**
(45) Veröffentlichungstag und Bekanntmachung des Hinweises auf die Patenterteilung: **23.06.2004**
(21) Anmeldenummer: 00250326.6
(22) Anmeldetag: 28.09.2000
(51) Int. Cl.: E21B 7/20, F16L 55/165

(54) **Verfahren zur grabenlosen Auswechselung erdverlegter Leitungen**
Method for trenchless replacement of underground conduits
Procédé pour le remplacement de tuyauteries souterraines sans creuser de tranchée

(30) Priorität: 29.09.1999 DE 19948649
(43) Veröffentlichungstag der Anmeldung: 04.04.2001
(73) Patentinhaber: Berliner Wasserbetriebe Anstalt des öffentlichen Rechts, 10179 Berlin (DE)
(72) Erfinder: Gaebelein, Wilhelm, Dr.-Ing., 14163 Berlin (DE); Wilinski, Erich, Dr.-Ing., 10179 Berlin (DE)

(56) Entgegenhaltungen:
- EP-A- 1 013 874
- CA-A- 2 013 658
- DE-A- 3 938 765
- DE-C- 3 733 463
- DE-C- 19 829 667
- DE-C- 19 853 198
- US-A- 4 966 494

## Beschreibung

Die Erfindung betrifft ein Verfahren zur Auswechselung erdverlegter Leitung bei minimierter Belastung der Neurohre unter Verwendung eines Presskopfes.

Für die Auswechselung defekter oder nicht mehr voll funktionsfähiger Leitungen und Rohre, die im Erdreich verlegt sind und durch neue Rohre ersetzt werden müssen, sind mehrere Verfahren bekannt.

So ist ein Verfahren zur Rohrauswechselung bekannt ("Neue Technologien der grabenlosen Erneuerung und Sanierung von Druckrohrleitungen", Rohrleitungsbauverband e. V., Köln, 1/94, S. 46 und S. 93), mit dem die alte Leitung durch ein Rammgerät, beispielsweise eine Erdrakete, von innen her zum Bersten gebracht wird, wobei die Scherben nach außen in das umgebende Erdreich gedrückt werden und ein neues Rohr in die geschaffene Öffnung eingezogen wird.
Aufgrund der Erschütterung beim Schlagvorgang und der Lärm- und Abgasemission der erforderlichen Antriebsaggregate verbietet sich der Einsatz dieses Verfahrens in Gebieten dichter Bebauung. Nachteilig ist ferner, dass das gebrochene Altrohr im Boden verbleibt und nicht entsorgt wird und dass die scharfkantigen Scherben das neue Rohr schon beim Einbringen oder später durch lokale Spannungsspitzen schädigen können.

Nach einem weiteren Verfahren nach der DE 38 19 820 und der EP 0 346 267 erfolgt bei kleineren Dimensionen die Auswechselung der alten gegen neue Rohre dadurch, dass das Altrohr mit Gestängen verbunden und mit Hilfe von hydraulischen Vorrichtungen aus dem Erdreich gezogen wird.

Das neue Rohr ist an das Altrohr angekoppelt und wird bei Bedarf unter Zwischenschalten eines Adapters, der als Aufweitkegel ausgebildet sein kann, in den Hohlraum eingezogen. Das Altrohr wird in der Startbaugrube, in der das Ziehgerät installiert ist, in Stücken abgetrennt.
Das Verfahren ist für kleinere Dimensionen ausgelegt.

Ein anderes Verfahren nach der DE 195 22 579 und der EP 0 748 971 besteht darin, dass das Altrohr mit Hilfe eines Überfahrkopfes, in den messerartigen Trennvorrichtungen integriert sind, in Längsrichtung aufgeschnitten und durch ein Hüllrohr oder das neue Produktenrohr überfahren wird. Das darin eingeschlossene längs geteilte Altrohr wird nach Erreichen der Zielbaugrube herausgezogen und entsorgt. Bei Einsatz eines Hüllrohres wird das Neurohr mit dem Herausziehen des Altrohres gleichzeitig in das Hüllrohr eingezogen.
Dieses Verfahren ist nur für kleinere Dimensionen und für weiche Rohrmaterialien einsetzbar.

Des weiteren ist nach der Veröffentlichung EP 1 013 874 ein Verfahren und eine Vorrichtung zum Ersetzen von Rohren beschrieben, in dem ein Schutzrohr auf einen alten Rohrabschnitt aufgefahren wird. Das zwischen dem alten Rohrabschnitt und dem Schutzrohr befindliche Erdreich muss durch zusätzliche und kostenintensive Sondermaßnahmen entfernt werden. Auch verbleibt das Schutzrohr, das das Neurohr umgibt, im Erdreich und nachträgliche Arbeiten sind dadurch sehr aufwendig.

Für die Auswechselung von Bleileitungen sind ferner das Excalibur-Verfahren, veröffentlicht in der Zeitschrift "Tiefbau, Ingenieurbau, Straßenbau" vom Juni 1992, S. 443 bis 446, und das hydros-LEAD-Verfahren, veröffentlicht in der Zeitschrift "gwf Wasser/Abwasser", August 1995, Heft 14, S. 151 bis 154, bekannt. Beide Verfahren sind nur für kleine Dimensionen anwendbar.

Nach einem Verfahren (DE 39 25 504), vorgesehen für große Nennweiten bis DN 400, werden, um ein eventuelles Abreißen des Altrohres während des Ziehvorganges zu vermeiden, hochfeste Zugstangen miteinander verschraubt, durch das Altrohr geschoben und am Rohrstrangende mit einer Sicherungseinrichtung versehen. Anschließend wird das Altrohr durch Ziehen an den Zugstangen mittels einer hydraulischen Zugvorrichtung aus dem Erdreich gezogen.
In Zugrichtung hinter der Sicherungseinrichtung kann ein Aufweitkegel oder ein Adapter befestigt werden, an den ein Hüllrohr oder das neue Produktenrohr angekoppelt ist, das in die freiwerdende Öffnung eingezogen wird. In der Startbaugrube wird das Altrohr entweder stückweise abgetrennt oder über einen Spaltkegel gebrochen. Die Zugstangen werden abschnittsweise abgeschraubt und aus der Baugrube entfernt.

Das Verfahren nach DE 39 12 728 ist ähnlich aufgebaut wie unter DE 39 25 504 beschrieben. Dabei dient als Zieheinrichtung ein Stahlseil, das durch das alte Rohr hindurchgeführt und am Rohrende befestigt und anschließend mittels einer hydraulisch angetriebenen Seilscheibe oder Seiltrommel in die Zielgrube gezogen und dort aufgewickelt wird.

Nach einem Verfahren, beschrieben in DE 37 33 463, erfolgt das Herausschieben des Altrohres durch das Neurohr, wobei das Neurohr mit der gesamten Presskraft beaufschlagt wird.

Bei einem Verfahren zur Auswechselung von Rohren größerer Dimensionen wird das Altrohr mit Hilfe des Neurohres in Längsrichtung aus seiner Lage gedrückt und in Zwischenbaugruben oder in der Zielbaugrube zertrümmert.
Das Neurohr wird in der mit einer hydraulischen Presse ausgerüsteten Startbaugrube verschweißt und vorgepresst. Es wird dabei mit den gesamten Kräften für das Herausdrücken des Altrohres, das Aufweiten des Erdreiches und die Überwindung der Wandreibungskräfte beaufschlagt. Die Belastung des Neurohres mit diesen Kräften ist als nachteilig zu betrachten, da die Schweißmuffenbereiche sowie die inneren und äußeren Schutzschichten des Rohres beschädigt werden können.
Hierzu können als weitere Variante die Rohre vor dem Herauspressen an den hintereinander anschließenden Rohrstrecken mittels einer hydraulischen Presse vom umgebenden Erdreich gelöst werden, so dass die Presskräfte verringert werden. Eine Winde unterstützt den Pressvorgang durch Ziehen des auszuwechselnden Rohrabschnittes von einer Zwischenbaugrube aus.

Die genannten Verfahren genügen den Anforderungen an eine moderne Bauweise nur unvollkommen, sind zeit- und kostenaufwendig, insbesondere hinsichtlich der erforderlichen Umrüstungen der Geräte und Aggregate, und beanspruchen mit Ausnahme des Verfahrens DE 39 25 504 vor allem die Neurohre durch den Lasteintrag beim Aufweiten des Erdbereiches, beim Herausziehen oder Herauspressen des Altrohres und bei der Überwindung der Reibungskräfte zwischen dem Erdreich und der Außenhaut des Neurohres.

Nach der DE 38 22 214 ist ein Verfahren zum Auswechseln einer im Boden verbauten Rohrleitung, bei dem ein Montagerohr vorgetrieben wird, bekannt. Durch eine Vorrichtung zur Durchführung des Verfahrens wird die Rohrleitung in Bruchstücke zerstört.
Nachteilig hierbei ist, dass sich die Bruchstücke in der Rohrleitung befinden und somit die kontinuierliche Auswechselung der Rohrleitung behindern.

Aufgabe der Erfindung ist es, ein Verfahren zur grabenlosen Auswechselung erdverlegter Leitungen anzugeben, bei welchem das Altrohr vollständig aus dem Erdreich entfernt und die auf das Neurohr wirkenden, insbesondere für die Überwindung der Wandreibungskräfte erforderlichen statischen und dynamischen Kraftwirkungen weitestgehend minimiert werden.

Erfindungsgemäß wird die Aufgabe dadurch gelöst, dass ein Altrohr mittels eines Hilfsrohres aus dem Erdreich gedrückt und danach ein Neurohr in Verbindung mit dem Hilfsrohr gebracht und durch anschließendes Zurückziehen des Hilfsrohres eingebracht wird.

Weitere Varianten sind das Herausdrücken des Altrohres mittels eines Hilfsrohres, wobei sich das Neurohr innerhalb oder außerhalb des Hilfsrohres befindet und das Neurohr nach Zurückziehen des Hilfsrohres im Erdreich verbleibt.

Bei einer weiteren Ausgestaltung wird das Neurohr nach dem Herausdrücken des Altrohres in das Hilfsrohr eingebracht und danach wird das Hilfsrohr durch Zurückziehen geborgen.

Mit dem erfindungsgemäßen Verfahren werden die neu einzubauenden Rohre während des Auswechselungsprozesses von statischen und dynamischen Beanspruchungen entlastet und die Gefahr von Beschädigungen minimiert.
Das erfindungsgemäße Verfahren ist darüber hinaus aufwandsärmer und umweltgerechter durchzuführen und reduziert Verkehrsbeeinträchtigungen sowie Beeinträchtigungen durch Lärm, Abgas und Erschütterungen.

Die Erfindung soll an nachstehenden Ausführungsbeispielen näher erläutert werden. Die dazugehörigen Zeichnungen zeigen in:
- Figur 1 :: Direktes Herausdrücken des Altrohres mittels des Hilfsrohres und Einbringen des Neurohres durch Zurückziehen des Hilfsrohres
- Figur 2 und 3 :: Direktes Herausdrücken des Altrohres und gleichzeitiges Einbringen des Neurohres und nachträgliches Bergen des Hilfsrohres durch Zurückziehen
- Figur 4 :: Entfemen des Altrohres mittels des Hilfsrohres und Bergen des Hilfsrohres nach dem Einschieben des Neurohres

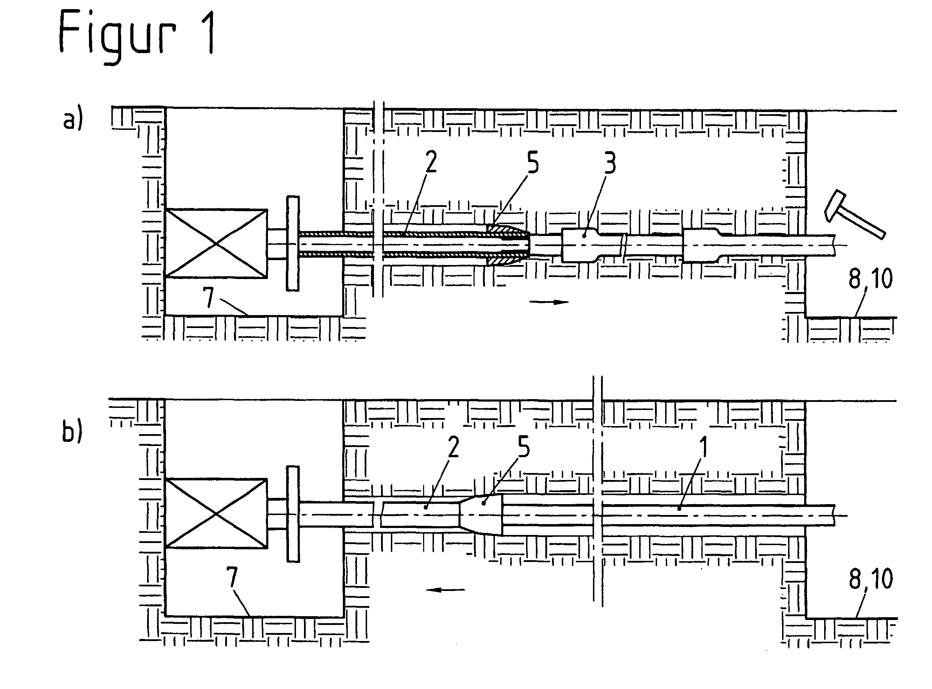

In Figur 1 ist eine Verfahrensweise dargestellt, nach der zunächst das Altrohr 3 mittels des Hilfsrohres 2 bis zu einer Zwischenbaugrube 10 oder bis zur Zielbaugrube 8 aus dem Boden herausgedrückt und dort zertrümmert wird. Nach Ankunft in der Zielbaugrube 8 wird das Neurohr 1 entweder direkt oder mit Hilfe des Presskopfes 5 an das Hilfsrohr 2 angekoppelt und mit dem Zurückziehen des Hilfsrohres 2 in die Bodenöffnung eingezogen.

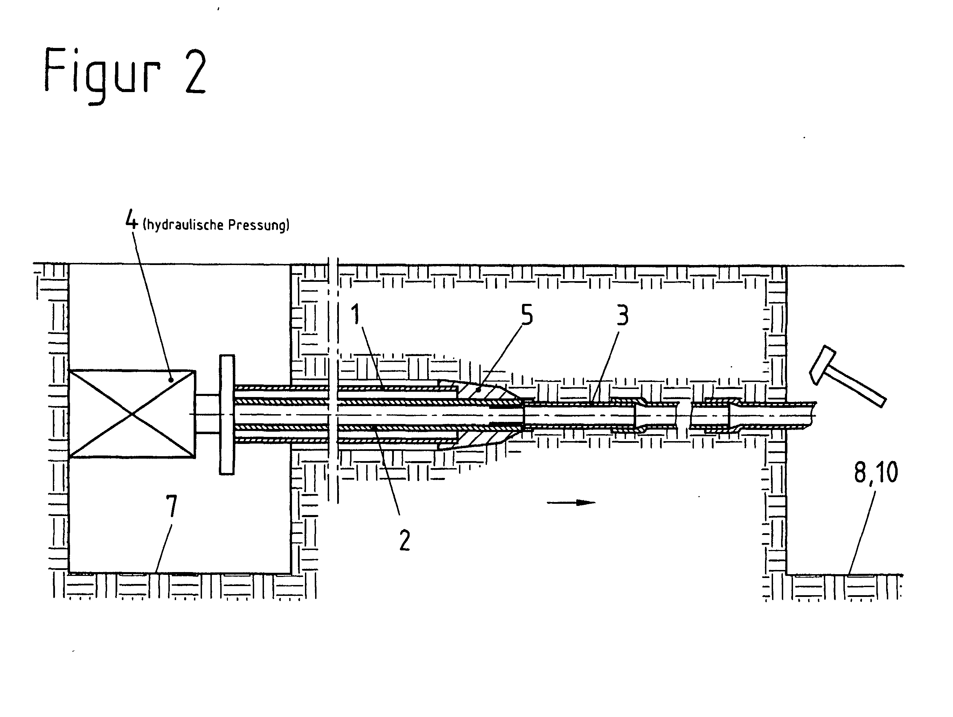

Figur 2 zeigt ein Verfahrensschema, bei dem das Neurohr 1 ebenfalls außerhalb des Hilfsrohres 2 mitgeführt wird. Die hydraulische Presse 4 drückt jedoch das Altrohr 3 mittels des vorn aufgesetzten Presskopfes 5 axial aus seiner Lage. In einer Zwischenbaugrube 10 oder in der Zielbaugrube 8 wird das Altrohr 3 zertrümmert und entsorgt. Bei Ankunft des Neurohres 1 in der Zielbaugrube 8 wird das Hilfsrohr 2 zur Startbaugrube 7 zurückgezogen und geborgen.

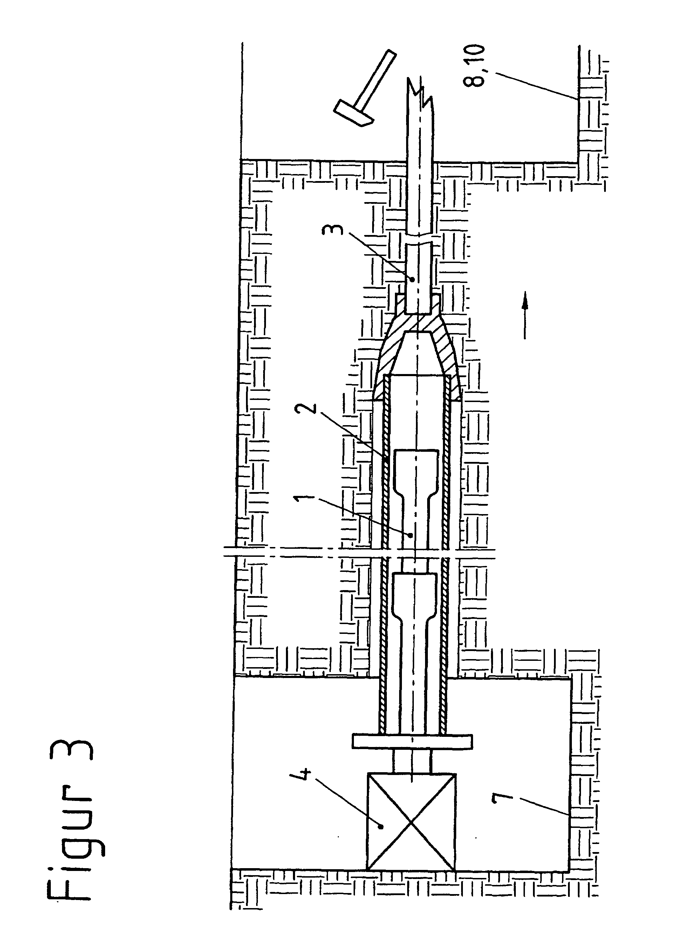

Die Figur 3 zeigt die gleiche Verfahrensweise, wobei das Neurohr 1 jedoch innerhalb des Hilfsrohres 2 mitgeführt wird. Wenn das Neurohr 1 die Zielbaugrube 8 erreicht hat, wird es arretiert und das Hilfsrohr 2 in die Startgrube 7 zurückgezogen und geborgen.

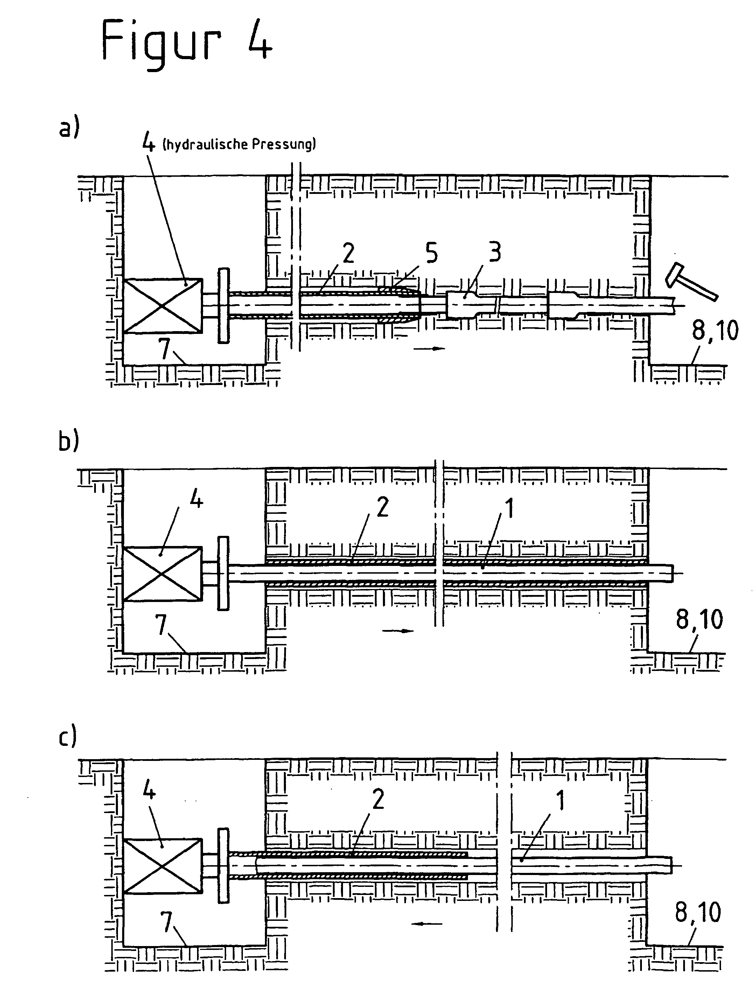

Figur 4 zeigt eine Verfahrensweise, bei der das Altrohr 3 durch das Hilfsrohr 2 aus dem Boden gedrückt wird und nach Einreichen der Zielbaugrube 8 das Neurohr 1 in das Hilfsrohr 2 eingebracht wird. Das Hilfsrohr 2 kann gegebenenfalls im Boden verbleiben oder es wird unter Festhalten des Neurohres 1 aus dem Boden entfernt.

## Patentansprüche

1. Verfahren zur grabenlosen Auswechselung erdverlegter Rohre unter Verwendung eines Presskopfes,
**dadurch gekennzeichnet, dass**
ein Altrohr (3) mittels eines Hilfsrohres (2) aus dem Erdreich gedrückt, danach ein Neurohr (1) in Verbindung mit dem Hilfsrohr (2) gebracht und durch Zurückziehen des Hilfsrohres (2) das Neurohr (1) eingebracht wird.

2. Verfahren nach dem Anspruch 1,
**dadurch gekennzeichnet, dass**
das Altrohr (3) von dem in das Neurohr (1) eingebrachten Hilfsrohr (2) in eine Ziel- oder Zwischenbaugrube (8; 10) gedrückt und dort zerstört wird.

3. Verfahren nach dem Anspruch 1,
**dadurch gekennzeichnet, dass**
das Altrohr (3) vom Hilfsrohr (2), in dem sich das Neurohr (1) befindet, aus dem Erdreich gedrückt wird.

4. Verfahren nach dem Anspruch 1,
**dadurch gekennzeichnet, dass**
nach dem Herausziehen des Altrohres (3) das Neurohr (1) in das Hilfsrohr (2) eingebracht und danach das Hilfsrohr (2) durch Zurückziehen geborgen wird,

## Claims

1. Method for trenchless replacement of underground pipes with use of a press head, **characterised in that** an old pipe (3) is forced out of the ground by means of an auxiliary pipe (2), thereafter a new pipe (1) is brought into connection with the auxiliary pipe (2) and the new pipe (1) is introduced by retracting the auxiliary pipe (2).

2. Method according to claim 1, **characterised in that** the old pipe (3) is forced by the auxiliary pipe (2), which is introduced into the new pipe (1), into a destination or an intermediate excavation (8; 10) and destroyed there.

3. Method according to claim 1, **characterised in that** the old pipe (3) is forced by the auxiliary pipe (2), in which the new pipe (1) is disposed, out of the ground.

4. Method according to claim 1, **characterised in that** after withdrawal of the old pipe (3) the new pipe (1) is introduced into the auxiliary pipe (2) and thereafter the auxiliary pipe (2) is recovered by withdrawal.

## Revendications

1. Procédé de remplacement de tuyaux enfouis en utilisant une tête de pression, sans ouvrir de tranchée
**caractérisé en ce qu'**
on pousse un tuyau ancien (3) à l'aide d'un tuyau auxiliaire (2) pour le dégager de la terre puis on met un nouveau tuyau (1) en liaison avec le tuyau auxiliaire (2) et on met en place le nouveau tuyau (1) en retirant le tuyau auxiliaire (2).

2. Procédé selon la revendication 1,
**caractérisé en ce qu'**
on pousse le tuyau ancien (3) avec le tuyau auxiliaire (2) introduit dans le tuyau nouveau (1), dans une tranchée de destination ou intermédiaire (8, 10) et on le casse.

3. Procédé selon la revendication 1,
**caractérisé en ce que**
le tuyau ancien (3) est poussé hors de la terre par le tuyau auxiliaire (2) dans lequel se trouve le tuyau nouveau (1).

4. Procédé selon la revendication 1,
**caractérisé en ce qu'**
après extraction du tuyau ancien (3) on introduit le tuyau nouveau (1) dans le tuyau auxiliaire (2) et ensuite on récupère le tuyau auxiliaire (2) en le retirant.
